# NEUE EUROPÄISCHE PATENTSCHRIFT

(11) **EP 2 941 363 B2**
(45) Veröffentlichungstag und Bekanntmachung des Hinweises auf die Entscheidung über den Einspruch: **13.09.2023**
(45) Hinweis auf die Patenterteilung: 21.12.2016
(21) Anmeldenummer: 14700139.0
(22) Anmeldetag: 02.01.2014
(51) Int. Cl.: B60L 50/13, B60K 5/08, H02J 1/10, H02M 1/00, B60L 15/00, B60L 3/00

(54) **VERSORGUNG VON ELEKTRISCHEN TRAKTIONSMOTOREN EINES SCHIENENFAHRZEUGS MIT ELEKTRISCHER ENERGIE UNTER VERWENDUNG EINER MEHRZAHL VON VERBRENNUNGSMOTOREN**
SUPPLYING ELECTRIC TRACTION MOTORS OF A RAIL VEHICLE WITH ELECTRICAL ENERGY USING A PLURALITY OF INTERNAL COMBUSTION ENGINES
ALIMENTATION EN ÉNERGIE ÉLECTRIQUE DE MOTEURS ÉLECTRIQUES DE PROPULSION D'UN VÉHICULE FERROVIAIRE À L'AIDE D'UNE PLURALITÉ DE MOTEURS À COMBUSTION

(30) Priorität: 02.01.2013 DE 102013200019
(43) Veröffentlichungstag der Anmeldung: 11.11.2015
(73) Patentinhaber: Bombardier Transportation GmbH, 10785 Berlin (DE)
(72) Erfinder: GERADTS, Karlheinz, CH-5603 Staufen AG (CH); KUTSCHKER, Martin, 83623 Dietramszell (DE)
(74) Vertreter: Patentanwälte Bressel und Partner mbB
(86) Internationale Anmeldenummer: PCT/EP2014/050029
(87) Internationale Veröffentlichungsnummer: WO 2014/106637

(56) Entgegenhaltungen:
- WO-A2-2006/020587
- US-A1- 2008 082 247
- US-A1- 2008 103 632
- US-A1- 2011 080 040

## Beschreibung

Die Erfindung betrifft eine Anordnung zum Versorgen von elektrischen Traktionsmotoren in einem Schienenfahrzeug mit elektrischer Energie, wobei die Anordnung zumindest zwei Verbrennungsmotoren aufweist. Für die zumindest zwei Verbrennungsmotoren ist jeweils eine zugeordnete elektrische Maschine zum Erzeugen der elektrischen Energie vorgesehen, wobei die elektrische Maschine mechanisch mit dem Verbrennungsmotor gekoppelt ist, sodass sie bei einem Generator-Betrieb der elektrischen Maschine von dem Verbrennungsmotor angetrieben wird. Somit sind zumindest eine erste und eine zweite Verbrennungsmotor-Maschinen-Kombination gebildet. Der zumindest eine elektrische Traktionsmotor des Schienenfahrzeugs ist über zumindest einen Traktions-Anschluss elektrisch mit zumindest einer der elektrischen Maschinen verbindbar. Die Erfindung betrifft ferner ein Verfahren zum Versorgen von elektrischen Traktionsmotoren in einem Schienenfahrzeug mit elektrischer Energie, wobei zumindest zwei Verbrennungsmotoren jeweils in Kombination mit einer zugeordneten elektrischen Maschine betrieben werden, sodass zumindest eine erste und eine zweite Verbrennungsmotor-Maschinen-Kombination betrieben werden. Zumindest eine erste der elektrischen Maschinen erzeugt in einem ersten Betriebszustand der Maschine während eines Generator-Betriebes der jeweiligen elektrischen Maschine angetrieben durch den zugeordneten Verbrennungsmotor Wechselstrom, der für einen Betrieb zumindest eines elektrischen Traktionsmotors genutzt wird. Zumindest eine zweite der elektrischen Maschinen wird in einem zweiten Betriebszustand der Maschine mit Wechselstrom von einem ihr zugeordneten zweiten Maschinen-Stromrichter versorgt und treibt den ihr zugeordneten Verbrennungsmotor an.

Bei dem Schienenfahrzeug handelt es sich z.B. um eine Lokomotive. Die Erfindung ist jedoch nicht darauf beschränkt. Vielmehr kann das Schienenfahrzeug z.B. auch ein Zugverband sein.

Die von den Verbrennungsmotoren erzeugte elektrische Energie steht in dem Schienenfahrzeug insbesondere nicht nur für die Versorgung des zumindest einen Traktionsmotor, sondern auch für die Versorgung von anderen elektrischen Verbrauchern zur Verfügung. Bei den anderen Verbrauchern handelt es sich insbesondere um so genannte Hilfsbetriebe, die zwar nicht unmittelbar Traktion erzeugen, insbesondere aber für den Fahrbetrieb des Schienenfahrzeugs zwingend erforderlich sein können. Hilfsbetriebe können allgemein dadurch definiert werden, dass sie über einen eigenen Hilfsbetriebe-Wechselrichter oder eine Mehrzahl eigener Hilfsbetriebe-Wechselrichter aus dem üblicherweise vorhandenen Gleichspannungs-Zwischenkreis mit elektrischer Energie versorgt werden. Zu den Hilfsbetrieben gehören z.B. Ventilatoren und andere Kühleinrichtungen, die die Verbrennungsmotoren, die Traktionsmotoren und/oder andere für den Fahrbetrieb erforderliche Einrichtungen (z.B. Stromrichter) kühlen. Ferner ist für den Fahrbetrieb eine Bremsanlage erforderlich und gehören daher Komponenten der Bremsanlage wie Luftkompressor zu den Hilfsbetrieben. Weitere Beispiele für Hilfsbetriebe sind eine Feuerlöscheinrichtung des Schienenfahrzeugs, elektronische Einrichtungen zur Steuerung des Betriebs des Schienenfahrzeugs, Batterieladegeräte, für den Fahrbetrieb zumindest zeitweise erforderliche Heizungen, z.B. Scheibenheizung der Frontscheibe, und/oder Beleuchtungseinrichtung im Fahrerabteil. Optional können von den Hilfsbetrieben elektrische Einrichtungen unterschieden werden, die lediglich für den Komfort von Passagieren zur Verfügung stehen, wie zum Beispiel Leuchten in Fahrzeug-Abteilen. Solche elektrischen Einrichtungen werden üblicherweise in Zügen über die so genannte Zug-Sammelschiene mit elektrischer Energie versorgt. Die Zug-Sammelschiene ist nicht über den Hilfsbetriebe-Wechselrichter oder einen der Hilfsbetriebe-Wechselrichter mit dem Gleichspannungs-Zwischenkreis verbunden, sondern über einen eigenen Wechselrichter.

Wie an sich bereits bekannt kann die von den elektrischen Maschinen erzeugte elektrische Energie auch bei der vorliegenden Erfindung über zumindest einen Gleichrichter (im Folgenden: Generator-Gleichrichter, da von dem Generator erzeugter Wechselstrom gleichgerichtet wird) in einen Gleichspannungs-Zwischenkreis eingespeist werden. An den Gleichspannungszwischenkreis sind typischerweise mehrere Wechselrichter angeschlossen, die wiederum den Wechselstrom auf dem gewünschten elektrischen Spannungsniveau oder in dem gewünschten elektrischen Spannungsbereich erzeugen, der für die auf der Wechselspannungsseite angeschlossenen Verbraucher und Systeme benötigt wird. Zusätzlich zu den Wechselrichtern können auf deren Gleichspannungsseite Gleichspannungswandler und/oder auf deren Wechselspannungsseite Transformatoren vorgesehen sein, um das Spannungsniveau zu verändern. Auch andere elektrische Konverter können an den Gleichspannungs-Zwischenkreis entweder direkt oder indirekt angeschlossen sein. Ferner können außer den genannten Hilfsbetrieben auch andere elektrische Verbraucher, wie z.B. für den Komfort von Passagieren vorhandene elektrische Einrichtungen wie Licht, Klimaanlage und Informationssysteme, mit elektrischer Energie aus dem Gleichspannungs-Zwischenkreis versorgt werden, z. B. über einen anderen Wechselrichter als die für den Fahrbetrieb erforderlichen Hilfsbetriebe.

Z.B. sind an den Gleichspannungs-Zwischenkreis angeschlossen: eine Mehrzahl von Traktionsmotoren des Schienenfahrzeugs über ein oder mehrere Traktionswechselrichter; eine Zugstromsammelschiene über einen zusätzlichen Konverter oder unmittelbar; für den Fahrbetrieb erforderliche Hilfsbetriebe über einen Hilfsbetriebe-Wechselrichter. Ferner können weitere Konverter an dem Zwischenkreis angeschlossen sein, z.B. zum Zweck der Umsetzung überflüssiger Energie, die beim Bremsen des Schienenfahrzeugs in den Zwischenkreis eingespeist wird, in Wärme. Ein Beispiel einer solchen Anordnung ist in WO 2009/077184 A1 beschrieben.

Da im Fall der Erfindung mehr als ein Verbrennungsmotor vorhanden ist und jeweils zumindest eine elektrische Maschine mit dem Verbrennungsmotor gekoppelt ist, kann lediglich ein Teil der vorhandenen elektrischen Maschinen elektrische Energie erzeugen, während gleichzeitig ein anderer Teil der elektrischen Maschinen als Motor betrieben wird, insbesondere um den zugeordneten Verbrennungsmotor im Leerlaufbetrieb anzutreiben. Dies hat den Vorteil, dass die Kraftstoffzufuhr zu dem Verbrennungsmotor abgeschaltet werden kann. Alternativ ist es aber auch möglich, dass zumindest einer der Verbrennungsmotoren lediglich bei niedriger Drehzahl läuft und daher von der oder den zugeordneten elektrischen Maschinen lediglich eine geringe elektrische Leistung erzeugt wird, die z.B. nicht oder nicht nennenswert zu der elektrischen Leistung beiträgt, die in den Gleichspannungs-Zwischenkreis eingespeist wird.

Eine Mehrzahl von Verbrennungsmotor-Maschinen-Kombinationen ermöglicht daher einen Teillastbetrieb des Schienenfahrzeugs, d.h. einen Betrieb, in dem nicht die maximal mögliche elektrische Leistung benötigt wird. Unter einem Teillastbetrieb wird daher ein Betrieb verstanden, in dem die mechanische Leistung lediglich eines Teils der Verbrennungsmotoren ausreicht, um die erforderliche elektrische Leistung bereitzustellen. Neben einer Reduktion des Kraftstoffverbrauchs der Verbrennungsmotoren hat der Teillastbetrieb auch den Vorteil, dass die Geräuschbelastung der Umgebung geringer ist. Beispielsweise können vier Verbrennungsmotor-Maschinen-Kombinationen vorhanden sein, wobei vorzugsweise jede Kombination unabhängig von den anderen Kombinationen entweder im Leerlaufbetrieb oder am optimalen Leistungspunkt betrieben werden kann. Optional können für jede Kombination mehr als zwei Betriebsarten eingestellt werden, z.B. zusätzlich zu den beiden genannten Betriebsarten ein Betrieb mit mittlerer Leistung der als Generator betriebenen elektrischen Maschine.

Insbesondere wird hiermit für die weiteren möglichen Merkmale einer Anordnung mit mehreren Verbrennungsmotor-Maschinen-Kombinationen auf die internationale Patentanmeldung mit der Anmeldenummer PCT/EP 2012/052705 Bezug genommen, die am 16. Februar 2012 eingereicht wurde. Insbesondere wird der gesamte Inhalt dieser Anmeldung hiermit in die vorliegende Anmeldung aufgenommen.

Elektrische Hilfsbetriebe, die zusätzlich zu den elektrischen Traktionsmotoren vorhanden sind und aus dem Gleichspannungs-Zwischenkreis mit elektrischer Energie versorgt werden, umfassen insbesondere solche Hilfsbetriebe, die wie oben erwähnt für den Fahrbetrieb des Schienenfahrzeugs erforderlich sind. Wenn daher der Hilfsbetriebe-Wechselrichter, über den diese Hilfsbetriebe elektrisch mit dem Gleichspannungs-Zwischenkreis verbunden sind, ausfällt oder abgeschaltet werden muss, kann der Fahrbetrieb nicht fortgesetzt werden. Dies gilt, obwohl der Gleichspannungs-Zwischenkreis und die Versorgung der Traktionsmotoren aus dem Zwischenkreis unter Umständen noch funktionsfähig sind.

Eine, mehrere oder alle der Verbrennungsmotor-Maschinen-Kombinationen könnten abgeschaltet werden, sodass es zu gegebener Zeit erforderlich wird, eine oder mehrere abgeschaltete Verbrennungsmotor-Maschinen-Kombinationen zu starten. Insbesondere muss der Verbrennungsmotor der Kombination gestartet werden, wozu entsprechende Energie erforderlich ist. Im Fall der vorliegenden Erfindung wird der Start zumindest eines Verbrennungsmotors mit Hilfe der zugeordneten elektrischen Maschine durchgeführt, indem die elektrische Maschine den mechanisch mit ihr gekoppelten Verbrennungsmotor antreibt. Insbesondere ab einer bestimmten Mindest-Drehzahl des Verbrennungsmotors kann die Kraftstoffzufuhr zu dem Verbrennungsmotor in Betrieb genommen werden, sodass der Verbrennungsmotor beginnt, aus eigener Kraft zu arbeiten. Ab diesem Zustand ist der Verbrennungsmotor gestartet, wobei allerdings der Startvorgang noch andauern kann, bis der Verbrennungsmotor eine Drehzahl erreicht, bei der er dauerhaft ohne Last betrieben werden kann ohne auszugehen und jederzeit bereit ist, seine Drehzahl zu erhöhen und auch unter Last zu arbeiten. Diese Drehzahl wird üblicherweise als eine Leerlaufdrehzahl bezeichnet. Insbesondere kann der Verbrennungsmotor ab dem Zeitpunkt, zu dem er aus eigener Kraft arbeitet, nicht mehr oder nur noch zusätzlich von der zugeordneten elektrischen Maschine angetrieben werden, und ab diesem oder einem späteren Zeitpunkt umgekehrt die elektrische Maschine antreiben. Bei der Leerlaufdrehzahl treibt der Verbrennungsmotor die elektrische Maschine an, welche jedoch nicht oder in geringem Umfang eine elektrische Last mit Energie versorgt. Bei weiterer Erhöhung der Drehzahl steigert der Verbrennungsmotor die Leistung, mit der die elektrische Maschine Wechselstrom erzeugt, sodass elektrische Verbraucher mit elektrischer Energie von der elektrischen Maschine versorgt werden können.

Zweckmäßigerweise wird die Energie für den Start zumindest eines der Verbrennungsmotoren aus einem Energiespeicher des Schienenfahrzeugs bezogen, insbesondere einem elektrischen oder elektrochemischen Energiespeicher, insbesondere der Fahrzeugbatterie. Der Start mehrerer Verbrennungsmotoren und auch die häufige Wiederholung von Startvorgängen nach Abschaltung von Verbrennungsmotoren (z.B. in einem Teillastbetrieb, siehe oben) belastet den Energiespeicher des Fahrzeugs erheblich. Um einer Erschöpfung des Energiespeichers vorzubeugen, kann die Speicherkapazität des Energiespeichers vergrößert werden. Dies ist jedoch mit zusätzlichen Kosten und/oder einer Erhöhung des Gewichts und Bauvolumens des Energiespeichers verbunden, wobei der Energiespeicher auch aus verteilt in dem Fahrzeug angeordneten Einheiten bestehen kann.

Es ist üblich, das Spannungsniveau am Ausgang des Energiespeichers (z.B. 110 V Gleichspannung) durch einen Spannungswandler zu erhöhen, um eine ausreichende Spannung für das Starten der Verbrennungsmotoren zur Verfügung zu haben. Z.B. ist ein Maschinenwechselrichter, der mit Gleichstrom aus dem Energiespeicher bzw. dem Spannungswandler versorgt wird, um die elektrische Maschine mit Wechselstrom zu versorgen, für eine Gleichspannung in der Größenordnung von 750 V oder 1 kV ausgelegt.

Es kann vorkommen, dass der Gleichspannungswandler ausfällt und daher kein Verbrennungsmotor gestartet werden kann, sodass das Schienenfahrzeug nicht fahrbereit ist. Dem kann damit vorgebeugt werden, dass zumindest ein zweiter, redundanter Spannungswandler vorgesehen wird. Dies erhöht jedoch wiederum den Aufwand hinsichtlich der Herstellungskosten, des Bauraums und des Gewichts.

US 2011/0080040 A1 beschreibt eine Antriebsvorrichtung mit Dieselmotoren, die jeweils einem Generator Rotationsenergie zuführen, um einen Wechselstrom zu erzeugen, der einem entsprechenden Gleichrichter zugeführt wird. Jeder Gleichrichter ist elektrisch mit einem der Generatoren verbunden, um einen Gleichstrom zu erzeugen, der einem Gleichspannungszwischenkreis zugeführt wird. An den Gleichspannungszwischenkreis angeschlossene Umrichter wandeln das Gleichspannungssignal an dem Gleichspannungszwischenkreis in Wechselstrom um, um einen Antriebsmotor anzutreiben. Eine Steuerung ist mit den Generatoren verbunden.

WO 2006/020587 A2 beschreibt Verfahren zum regenerativen Bremsen einer Hybrid-Lokomotive. Die Lokomotive kann mehrere Maschinen haben.

Es ist eine Aufgabe der vorliegenden Erfindung, bei einer Anordnung zum Versorgen von elektrischen Traktionsmotoren in einem Schienenfahrzeug mit einer Mehrzahl von Verbrennungsmotoren den Aufwand für das Starten der Verbrennungsmotoren gering zu halten.

Gemäß einem Grundgedanken der vorliegenden Erfindung wird eine bereits gestartete oder eine in Betrieb befindliche Verbrennungsmotor-Maschinen-Kombination dazu genutzt, zumindest eine weitere Verbrennungsmotor-Maschinen-Kombination zu starten. Insbesondere wird dabei Wechselstrom, der von der elektrischen Maschine der ersten, bereits betriebenen Kombination erzeugt wird, d.h. von der ersten elektrischen Maschine zu der zweiten elektrischen Maschine der noch nicht gestarteten Kombination geleitet, um die zweite elektrische Maschine zu betreiben und dadurch den Verbrennungsmotor der zweiten Kombination zu starten. In gleicher Weise kann verfahren werden, wenn während des weiteren Verlaufs des Startvorgangs oder während eines sonstigen Betriebes der zweiten Kombination ein Bedarf der zweiten elektrischen Maschine an der Versorgung mit elektrischer Energie entsteht oder besteht. Dies kann insbesondere der Fall sein, wenn der Verbrennungsmotor im Leerlauf (das heißt bei Leerlaufdrehzahl) bei reduzierter Kraftstoffzufuhr oder abgeschalteter Kraftstoffzufuhr betrieben werden soll. Dies kann aber auch der Fall sein, wenn der Betrieb des zweiten Verbrennungsmotors gestört wird und daher die zweite elektrische Maschine den zweiten Verbrennungsmotor antreibt, z.B. um einen unerwünschten Stillstand des zweiten Verbrennungsmotors zu vermeiden.

Sowohl der ersten als auch der zweiten elektrischen Maschine ist jeweils ein Maschinen-Stromrichter zugeordnet, dessen Wechselstromseite mit der zugeordneten elektrischen Maschine elektrisch verbunden ist. Die Maschinen-Stromrichter weisen jeweils eine Gleichstromseite auf, wobei die Gleichstromseiten der Maschinen-Stromrichter elektrisch über eine Gleichspannungsverbindung (d.h. Leitung) miteinander verbunden sind. Insbesondere sind die Gleichstromseiten der Maschinen-Stromrichter daher direkt, ohne zusätzliche Stromrichter (z.B. Spannungswandler) miteinander verbunden.

In bevorzugter Ausgestaltung ist zumindest einer der Maschinen-Stromrichter und sind vorzugsweise alle Maschinen-Stromrichter, deren Gleichstromseiten über die Gleichspannungsleitung direkt miteinander verbunden sind, mit einer elektrischen Kapazität verbunden (z.B. einem Kondensator oder einer Anordnung von Kondensatoren). Ein Anschluss der Kapazität ist dabei an das erste Potenzial des Gleichspannungsanschlusses des Maschinen-Stromrichters angeschlossen und der zweite, entgegengesetzte Anschluss der Kapazität ist an das zweite Potenzial des Gleichspannungsanschlusses des Maschinen-Stromrichters angeschlossen.

Vorzugsweise ist jede der Gleichspannungsseiten der Maschinen-Stromrichter in dieser Weise mit einer Kapazität gekoppelt. Dies hat den Vorteil, dass Schwankungen der Gleichspannung ausgeglichen werden. Aber bereits eine einzige Kapazität, deren Pole mit den beiden Potenzialen der Gleichspannungsleitung verbunden sind, führt zu einer Glättung von Gleichspannungsschwankungen. Ferner hat eine solche Kapazität oder die Mehrzahl solcher Kapazitäten den Vorteil, dass darin elektrische Energie gespeichert wird, sobald die Kapazität aufgeladen wird. Für den Vorgang der Versorgung der Maschinen-Stromrichter untereinander mit elektrischer Energie hat dies den Vorteil, dass kurzzeitig eine höhere Leistung für den Start oder Betrieb zumindest einer der Verbrennungsmotor-Maschinen-Kombinationen zur Verfügung steht. Z.B. kann daher vor, während und/oder nach dem Start der ersten Verbrennungsmotor-Maschinen-Kombinationen die Kapazität oder die Mehrzahl von Kapazitäten aufgeladen werden und erst dann die zweite Verbrennungsmotor-Maschinen-Kombinationen gestartet werden.

Insbesondere können mehr als zwei Verbrennungsmotor-Maschinen-Kombinationen vorhanden sein, deren elektrische Maschinen in der oben für zwei Kombinationen beschriebenen Weise miteinander gekoppelt sind (das heißt die Gleichspannungsseiten der Maschinen-Stromrichtern sind miteinander verbunden) und/oder betrieben werden können. Darüber hinaus ist es daher möglich, dass nach dem Start oder bei Betrieb zumindest einer der Kombinationen diese Kombination oder Kombinationen Energie für den Start und/oder Betrieb einer oder mehrerer der anderen Kombinationen liefert/liefern.

Die Erfindung hat den Vorteil, dass der Energiespeicher des Fahrzeugs weniger belastet wird, denn er wird lediglich noch für den Start der ersten Kombination benötigt. Außerdem ist die Zuverlässigkeit des Schienenfahrzeugs erhöht, obwohl ein redundanter Spannungswandler zum Wandeln des Spannungsniveaus am Ausgang des Energiespeichers nicht zwingend erforderlich ist.

Es ist üblich, dass die elektrischen Maschinen der Kombinationen elektrische Energie über zumindest einen Gleichrichter in einen Gleichspannungszwischenkreis des Fahrzeugs einspeisen. Durch die zusätzlichen Maschinen-Stromrichter, welche über die Gleichspannungsverbindung miteinander verbunden sind, wird insgesamt Gewicht und Volumen gespart. Der Grund dafür liegt darin, dass der zumindest eine Gleichrichter zwischen den elektrischen Maschinen und dem Gleichspannungszwischenkreis für sehr hohe Leistungen ausgelegt ist und daher entsprechend großes Gewicht und Volumen benötigt. Wenn der Gleichrichter zusätzlich als Wechselrichter betrieben werden soll, wird das Gewicht und Volumen größer. Dagegen sind die zusätzlichen Maschinen-Stromrichter insbesondere im Fall der zumindest einen zusätzlichen elektrischen Kapazität für verhältnismäßig kleine elektrische Leistungen ausgelegt. Der Zusatzaufwand für die Maschinen-Stromrichter ist daher gering.

Um die Anordnung mit Gleichspannungszwischenkreis, zumindest einem Gleichrichter zwischen den elektrischen Maschinen und dem Gleichspannungskreis und zusätzlichen Maschinen-Stromrichtern in vorteilhafter Weise betreiben zu können, ist zumindest ein elektrischer Schalter vorgesehen und sind optional mehrere elektrische Schalter vorgesehen, die von einer Steuerungsanordnung gesteuert, geöffnet und geschlossen werden können. Dadurch ist es möglich, zumindest einen der Maschinen-Stromrichter von dem oder den anderen Maschinen-Stromrichtern elektrisch zu trennen (in diesem Fall ist zumindest ein elektrischer Schalter in der Gleichspannungsverbindung vorgesehen oder am Anschluss des Maschinen-Stromrichters zu der Gleichspannungsverbindung vorgesehen) und/oder zumindest einen der Maschinen-Stromrichter von der ihm zugeordneten elektrischen Maschine zu trennen (in diesem Fall ist der zusätzliche elektrische Schalter in der Verbindung zwischen der Wechselspannungsseite des Maschinen-Stromrichters und der elektrischen Maschine angeordnet). Es ist ein elektrischer Schalter vorgesehen, mit dem der zumindest eine Gleichrichter oder einer der Gleichrichter (auch Generator-Gleichrichter genannt) von der oder den zugeordneten elektrischen Maschinen und/oder dem Gleichspannungszwischenkreis getrennt werden kann.

Vorzugsweise ist eine elektrische Maschine, während sie Energie (insbesondere für den Startvorgang eines Verbrennungsmotors einer anderen Kombination) über die Gleichspannungsverbindung zu einer elektrischen Maschine einer anderen Kombination liefert, elektrisch von dem Gleichspannungszwischenkreis getrennt. Gemäß Anspruch 3 ist eine erste der elektrischen Maschinen elektrisch von dem Gleichspannungszwischenkreis getrennt, während sie eine zweite der elektrischen Maschinen über die Gleichspannungsleitung mit elektrischer Energie versorgt. Gemäß Anspruch 1 ist die Steuerungsanordnung derart ausgestaltet, dass die erste elektrische Maschine mittels eines elektrischen Schalters elektrisch von dem Gleichspannungszwischenkreis getrennt ist, während sie die zweite elektrische Maschine über die Gleichspannungsleitung mit elektrischer Energie versorgt. Allgemeiner formuliert findet die Versorgung zumindest einer elektrischen Maschine über die Gleichspannungsverbindung ohne Nutzung des Gleichspannungszwischenkreises statt. Im Folgenden wird auch von einem Traktions-Anschluss gesprochen, über den ein Traktionsmotor des Schienenfahrzeugs versorgt wird. Die elektrische Maschine versorgt aber, während sie Energie (insbesondere für den Startvorgang eines Verbrennungsmotors einer anderen Kombination) über die Gleichspannungsverbindung zu einer elektrischen Maschine einer anderen Kombination liefert, keinen Traktionsmotor mit elektrischer Energie. Zum Beispiel ist entweder zwischen der elektrischen Maschine und dem Traktions-Anschluss oder zwischen dem Traktions-Anschluss und dem Traktionsmotor ein elektrischer Schalter vorgesehen, der geöffnet ist. Insbesondere bedeutet dies, dass die Gleichspannungsverbindung der Gleichspannungsseiten der Maschinen-Stromrichter zumindest während dieser Betriebsphase (und vorzugsweise immer) derart von dem Traktionsmotor oder den Traktionsmotoren getrennt, dass keine Energie aus der Gleichspannungsverbindung an einen Traktionsmotor geliefert wird.

Die Gleichrichterfunktion zumindest eines der Maschinen-Stromrichter, um Gleichspannungsenergie für zumindest einen anderen Maschinen-Stromrichter zur Verfügung zu stellen, und gemäß den Ansprüchen des Maschinen-Stromrichters, der der ersten elektrischen Maschine zugeordnet ist, wird/werden dadurch erreicht, dass antiparallel zu steuerbaren elektronischen Schaltern des Maschinen-Stromrichters, die die Wechselrichterfunktion ermöglichen, jeweils zumindest ein elektrisches Einwegventil (insbesondere eine Diode) angeordnet ist. Eine solche Diode wird insbesondere üblicherweise als Freilaufdiode bezeichnet. Die elektrischen Einwegventile werden vorzugsweise so ausgelegt, dass sie den für die Versorgung anderer Verbrennungsmotor-Maschinen-Kombinationen benötigten elektrischen Strom führen können.

Es wird eine Anordnung zum Versorgen von elektrischen Traktionsmotoren in einem Schienenfahrzeug mit elektrischer Energie vorgeschlagen, die die Merkmale des Anspruchs 1 aufweist.

Nicht im Einklang mit den beigefügten Ansprüchen könnte zusätzlich zu dem ersten Maschinen-Stromrichter, der der ersten elektrischen Maschine zugeordnet ist, ein Gleichrichter vorhanden sein, der den Wechselstrom von der ersten elektrischen Maschine gleichrichtet und dem zweiten Maschinen-Stromrichter zuführt. Es bedeutet jedoch geringeren Aufwand, den ersten Maschinen-Stromrichter auch als geeigneten Gleichrichter auszulegen.

Es wird ein Verfahren zum Versorgen von elektrischen Traktionsmotoren in einem Schienenfahrzeug mit elektrischer Energie vorgeschlagen, das die Merkmale des Anspruchs 3 aufweist.

Sowohl die zuvor definierte Anordnung als auch das zuvor definierte Verfahren erlauben bei Vorhandensein von mehr als einer Verbrennungsmotor-Maschinen-Kombination nicht nur die Versorgung eines der Maschinen-Stromrichter mit Gleichstrom, der aus Wechselstrom von der elektrischen Maschine einer anderen Kombination gleichgerichtet wurde. Vielmehr kann auch eine Mehrzahl der Maschinen-Stromrichter mit Gleichstrom versorgt werden, der zumindest aus Wechselstrom der elektrischen Maschine einer anderen der Kombinationen gleichgerichtet wird. Ferner ist es auch möglich, mit gleichgerichtetem Wechselstrom von einer Mehrzahl der elektrischen Maschinen eine oder mehrere Maschinen-Stromrichter einer oder mehrerer anderer Kombinationen zu versorgen.

Insbesondere ist die Gleichspannungsleitung (vorzugsweise elektrisch abtrennbar über zumindest einen elektrischen Schalter) mit einem elektrischen Anschluss verbunden, über den beim Betrieb des Fahrzeugs ein elektrischer oder elektrochemischer Energiespeicher (insbesondere die Fahrzeugbatterie) des Fahrzeugs elektrische Energie in die Gleichspannungsleitung einspeisen kann.

Die Gleichspannungsleitung kann daher insbesondere zum Start zumindest eines der Verbrennungsmotoren genutzt werden. In diesem Fall speist der Energiespeicher elektrische Energie in die Gleichspannungsleitung ein und kann diese elektrische Energie zum Starten des Verbrennungsmotors genutzt werden, indem der Maschinen-Stromrichter Wechselstrom erzeugt und die elektrische Maschine der Kombination damit betrieben wird.

Alternativ oder zusätzlich kann die elektrische Energie aus dem Energiespeicher des Fahrzeugs zum Aufladen einer elektrischen Kapazität genutzt werden, die mit ihren Polen zwischen die Potenziale der Gleichspannungsleitung geschaltet ist.

Der oben verwendete Begriff "erster Betriebszustand" bezieht sich jeweils auf die elektrische Maschine einer bestimmten Kombination bzw. auf die Kombination. Dies gilt auch für den Begriff "zweiter Betriebszustand". Es können weitere Betriebszustände vorkommen, zum Beispiel Stillstand des Verbrennungsmotors. In dem ersten Betriebszustand wird die elektrische Maschine von dem zugeordneten Verbrennungsmotor angetrieben und erzeugt eine elektrische Wechselspannung, aufgrund der ein Wechselstrom fließen kann. In dem zweiten Betriebszustand treibt die elektrische Maschine den zugeordneten Verbrennungsmotor an, während sie mit Wechselstrom aus dem zugeordneten Maschinen-Stromrichter (auch Maschinen-Wechselrichter genannt) versorgt wird. Dies bedeutet, dass bei mehreren Verbrennungsmotor-Maschinen-Kombinationen die verschiedenen elektrischen Maschinen bzw. Kombinationen zu einem Zeitpunkt in unterschiedlichen Betriebszuständen sein können. Während z.B. die elektrische Maschine der ersten Kombination in dem ersten Betriebszustand ist, ist z.B. die Maschine der zweiten Kombination in dem zweiten Betriebszustand. Es ist jedoch nicht ausgeschlossen, dass alle elektrischen Maschinen zu einem bestimmten Zeitpunkt in demselben Betriebszustand sein können. Wenn es sich dabei um den zweiten Betriebszustand handelt, kann Energie für den Betrieb der elektrischen Maschinen insbesondere über einen Gleichspannungszwischenkreis der Anordnung Verbrauchern zugeführt werden. Dies gilt auch dann, wenn sich keine oder nicht alle der elektrischen Maschinen in dem zweiten Betriebszustand befinden. Die Energie aus dem Gleichspannungszwischenkreis für die Versorgung der elektrischen Maschine(n) kann z.B. während eines Bremsvorganges des Schienenfahrzeugs von dem zumindest einen Traktionsmotor als Wechselspannungsenergie erzeugt werden und über den zugeordneten Traktions-Wechselrichter in den Gleichspannungszwischenkreis eingespeist werden.

Der Traktions-Anschluss kann insbesondere ein Wechselspannungsanschluss an der Wechselspannungsseite eines Traktions-Wechselrichters sein oder der Gleichspannungsanschluss des Traktions-Wechselrichters. Wie im Folgenden noch näher erläutert wird, können die elektrischen Maschinen den von ihnen erzeugten Wechselstrom zumindest einem Gleichrichter (Generator-Gleichrichter) zuführen und der von dem Gleichrichter gleichgerichtete Strom kann in einen Gleichspannungszwischenkreis eingespeist werden. An diesem Gleichspannungszwischenkreis ist in an sich bekannter Weise zumindest ein Traktions-Wechselrichter angeschlossen.

Es ist denkbar, dass zumindest einer der Maschinen-Stromrichter auch den Generator-Gleichrichter bildet. Dies ist jedoch nicht im Einklang mit den Patentansprüchen und wird auch nicht bevorzugt, insbesondere aus den oben bereits genannten Gründen.

Die Anordnung weist daher zusätzlich zu den Maschinen-Stromrichtern zumindest einen Generator-Gleichrichter auf zum Gleichrichten von Wechselströmen, die von den elektrischen Maschinen während eines Generator-Betriebes der jeweiligen elektrischen Maschine erzeugt werden, wobei der zumindest eine Generator-Gleichrichter auf seiner Wechselspannungsseite mit zumindest einer der elektrischen Maschinen verbunden ist und auf seiner Gleichspannungsseite mit einem Gleichspannungs-Zwischenkreis verbunden ist, über den der elektrische Traktionsmotor mit elektrischer Energie versorgbar ist. Hinsichtlich des Verfahrens entspricht dem, in dem ersten Betriebszustand der elektrischen Maschine oder der elektrischen Maschinen den erzeugten Wechselstrom von zumindest einem Generator-Gleichrichter, der zusätzlich zu den Maschinen-Stromrichtern vorhanden ist, gleichzurichten und in einen Gleichspannungszwischenkreis einzuspeisen, aus dem der zumindest eine elektrische Traktionsmotor mit elektrischer Energie versorgt wird. Gemäß den Ansprüchen ist ein Generator-Gleichrichter auf seiner Wechselspannungsseite mit der ersten elektrischen Maschine verbunden und auf seiner Gleichspannungsseite mit dem Gleichspannungs-Zwischenkreis verbunden.

Insbesondere kann zunächst zumindest eine elektrische Kapazität, die zwischen die elektrischen Potenziale des Gleichspannungszwischenkreises geschaltet ist, mit elektrischer Energie aufgeladen werden, und erst danach der erzeugte Wechselstrom von dem zumindest einen Generator-Gleichrichter in den Gleichspannungszwischenkreis eingespeist werden. Dies ermöglicht es, insbesondere aus dem abgeschalteten Zustand aller Verbrennungsmotoren zunächst einen der Verbrennungsmotoren zu starten und dann den Gleichspannungszwischenkreis mit Energie von der zugeordneten elektrischen Maschine zu versorgen, ohne in dem Gleichspannungszwischenkreis zu hohe elektrische Ströme zu erzeugen.

Alternativ ist es jedoch möglich, bereits während des Startvorganges des ersten Verbrennungsmotors, wenn dieser noch bei niedrigen Drehzahlen dreht und die von der zugeordneten elektrischen Maschine erzeugte Wechselspannung daher noch niedrig ist, Energie von der elektrischen Maschine in den Gleichspannungszwischenkreis einzuspeisen. In diesem Fall wird der Strom in dem Gleichspannungszwischenkreis durch die noch niedrige Wechselspannung begrenzt und die Kapazität in dem Gleichspannungszwischenkreis langsam aufgeladen. Auch in diesem Fall wird es jedoch bevorzugt, dass der Gleichrichter, über den die elektrische Maschine mit dem Gleichspannungszwischenkreis verbunden ist, zu Beginn des Startvorgangs noch keinen Gleichstrom in den Gleichspannungszwischenkreis einspeist. Der Grund dafür liegt darin, dass zu Beginn des Startvorgangs der Maschinen-Stromrichter eine hohe Wechselspannung für den Betrieb der elektrischen Maschine liefern soll. Dies würde wiederum zu hohen Strömen in dem Gleichspannungszwischenkreis führen und außerdem würde die Leistung des Maschinen-Stromrichters, die für den Startvorgang zur Verfügung steht, reduziert.

Insbesondere kann die Steuerungsanordnung eine Mehrzahl von Steuereinheiten aufweisen, die ausgestaltet ist, die Stromrichter und optional weitere Einrichtungen der Versorgungs-Anordnung zu steuern. Z. B. sind Steuereinheiten insbesondere für jeden der Stromrichter (Generator-Gleichrichter, Maschinen-Stromrichter, Hilfsbetriebe-Wechselrichter, Traktions-Wechselrichter), für die Verbrennungsmotoren und optional für die oben genannten steuerbaren elektrischen Schalter vorhanden. Vorzugsweise sind die Steuereinheiten steuerungstechnisch miteinander und/oder mit einer übergeordneten Steuereinheit verbunden.

Erfindungsgemäß werden die Maschinen-Stromrichter insbesondere von der genannten Steuerungsanordnung so gesteuert, dass sie ein Starten und/oder Antreiben zumindest eines der Verbrennungsmotoren durch die zugeordnete elektrische Maschine ermöglichen, wobei die zugeordnete elektrische Maschine Energie von einer anderen elektrischen Maschine einer der Kombinationen bezieht. Wenn z. B. zwei Maschinen-Stromrichter an dieser Art des Betriebes beteiligt sind, richtet der erste Maschinen-Stromrichter einen von der zugeordneten ersten elektrischen Maschine erzeugten Wechselstrom gleich und führt diesen Wechselstrom dem zweiten Maschinen-Stromrichter zu, der ihn wechselrichtet und so die zweite elektrische Maschine versorgt. Dabei wird der erste Maschinen-Stromrichter vorzugsweise nicht aktiv gesteuert, d. h. die während des Wechselrichter-Betriebes des Maschinen-Stromrichters vorgenommene Steuerung zur An- und Abschaltung elektronischer Schalter findet nicht statt und es wird der Wechselstrom passiv gleichgerichtet, das heißt z. B. mittels der oben genannten elektrischen Einwegventile (z. B. Dioden) gleichgerichtet. Z. B. bilden die elektrischen Einwegventile eine dreiphasige Halbbrückenschaltung. Dagegen wird der zweite Maschinen-Stromrichter, der den Gleichstrom von dem ersten Maschinen-Stromrichter wechselrichtet, vorzugsweise aktiv gesteuert, indem insbesondere seine elektronischen Schalter entsprechend ein- und ausgeschaltet werden.

Insbesondere wird zunächst zumindest eine elektrische Kapazität, die zwischen die elektrischen Potenziale der Gleichspannungsleitung geschaltet ist, mit elektrischer Energie aufgeladen, und erst danach eine elektrische Maschine mit umgerichtetem Gleichstrom aus der Gleichspannungsleitung und/oder aus der zumindest einen Kapazität (das heißt mit Wechselstrom) versorgt. Dies hat den Vorteil, dass für die Versorgung der elektrischen Maschine(n) aus der Gleichspannungsleitung mehr Energie zur Verfügung steht und Schwankungen der Spannung der Gleichspannungsleitung geglättet werden. Insbesondere beim Start des ersten Verbrennungsmotors mit Energie aus dem Energiespeicher des Fahrzeugs ist dies von Vorteil.

Ausführungsbeispiele der Erfindung werden nun unter Bezugnahme auf die beigefügte Zeichnung beschrieben. Die einzelnen Figuren der Zeichnung zeigen:
- Fig. 1: eine Ausführungsform einer Anordnung zum Versorgen von zumindest einem Traktionsmotor in einem Schienenfahrzeug mit elektrischer Energie und
- Fig. 2: einen Maschinen-Stromrichter und eine elektrisch an die Wechselspannungsseite des Stromrichters angeschlossene Maschine, wobei der Stromrichter auch als Gleichrichter betreibbar ist, um von der elektrischen Maschine erzeugten Wechselstrom gleichzurichten und in eine Gleichspannungsleitung einzuspeisen.

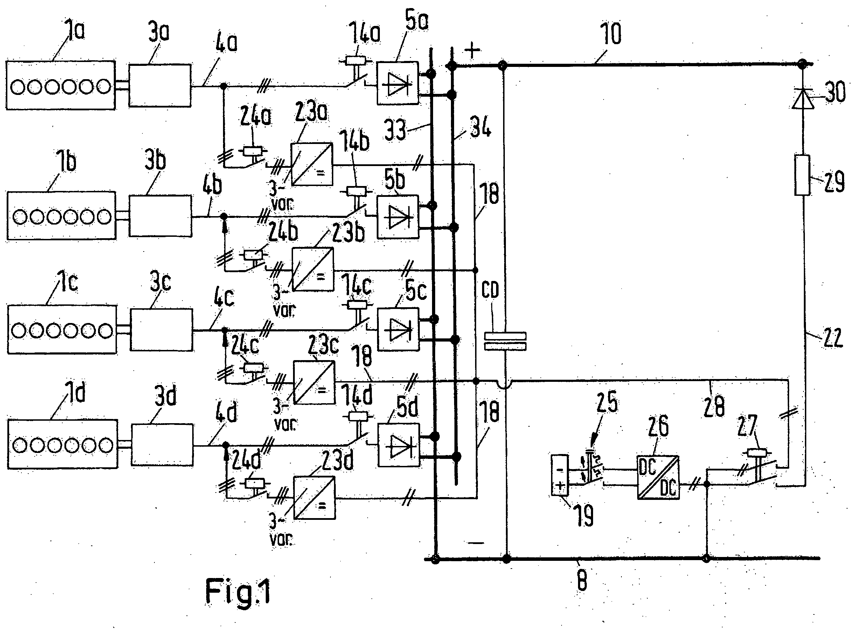

Das in Fig. 1 dargestellte Ausführungsbeispiel weist vier Verbrennungsmotor-Maschinen-Kombinationen 1, 3 auf, wobei die Verbrennungsmotoren 1 a, 1 b, 1 c, 1 d vorzugsweise Dieselmotoren sind. Bei den elektrischen Maschinen 3a, 3b, 3c, 3d handelt es sich z.B. um Permanentmagnet-Synchronmotoren.

Jede der Kombinationen 1, 3 ist über eine dreiphasige Anschlussleitung 4a, 4b, 4c, 4d mit einem der Kombination 1, 3 zugeordneten Generator-Gleichrichter 5a, 5b, 5c, 5d verbunden. Dabei führt die dreiphasige Anschlussleitung 4 jeder der Kombinationen über einen steuerbaren dreiphasigen Trennschalter 14a, 14b, 14c, 14d. Somit kann die dreiphasige elektrische Verbindung zwischen der elektrischen Maschine 3 und dem Generator-Gleichrichter 5 gesteuert durch eine Steuereinheit (nicht dargestellt) unterbrochen werden, insbesondere wenn die elektrische Maschine 3 der Kombination 1, 3 als Motor betrieben wird, aber auch während eines Startvorganges der Kombination 1, 3. Die Gleichrichter 5 sind über Verbindungsleitungen 33, 34, die als Sammelleitungen für alle Gleichrichter 5 ausgestaltet sind, an den Gleichspannungs-Zwischenkreis mit den Leitungen 8, 10 angeschlossen.

Nicht dargestellt sind Wechselrichter, die an die Leitungen 8, 10 angeschlossen sind, zum Beispiel zumindest ein Traktions-Wechselrichter, ein Hilfsbetriebe-Wechselrichter und ein Wechselrichter für die Zugstromversorgung.

Für jede der Kombinationen ist ein zugeordneter Maschinen-Wechselrichter 23a, 23b; 23c, 23d vorgesehen. Die Wechselspannungsseiten der Maschinen-Wechselrichter 23 sind jeweils über einen von einer Steuereinheit (nicht dargestellt) steuerbaren Schalter 24a, 24b, 24c, 24d mit der dreiphasigen Anschlussleitung 4 der Kombination verbunden.

In üblicher Weise ist eine Kapazität CD zwischen die Leitungen 8, 10 des Zwischenkreises geschaltet, um Schwankungen der Gleichspannung auszugleichen und/oder Energie aufzunehmen.

Außerdem sind die Gleichspannungsseiten der Maschinen-Wechselrichter 23 miteinander über eine Gleichspannungsverbindung 18 verbunden. In Fig. 1 die Gleichspannungsverbindung 18 ist durch Einzellinien dargestellt, obwohl es sich um eine zweipolige Verbindung handelt. Allerdings ist es möglich, dass die Gleichspannungsseiten zum Beispiel über eine einadrige elektrische Leitung und zusätzlich über Fahrzeugmasse miteinander verbunden sind. Da mehrere Kombinationen 1, 3 vorhanden sind, ist die Gleichspannungsverbindung 18 verzweigt.

Ferner ist mit der Gleichspannungsverbindung 18 eine weitere elektrische Leitung 28 verbunden, die insbesondere zweipolig ausgeführt ist und es erlaubt, über einen Schalter 27 und einen Spannungswandler 26 sowie über einen optionalen Schutzschalter 25 Energie aus einem elektrischen Energiespeicher 19 (z.B. Fahrzeugbatterie) zu entnehmen. Der Betrieb zumindest eines der Maschinen-Wechselrichter 23 ist daher auch mit Energie aus dem elektrischen Energiespeicher 19 möglich. Insbesondere wenn alle Verbrennungsmotoren 1 abgeschaltet sind, wird für den Start des ersten Verbrennungsmotors Energie aus dem elektrischen Energiespeicher 19 entnommen und für den Start zumindest einer Kombination 1, 3 genutzt. Z.B. wird zunächst die Kombination 1 a, 3a gestartet, dann deren elektrische Maschine 3a als Generator betrieben und die erzeugte elektrische Energie über den Generator-Gleichrichter 5b in den Zwischenkreis 8, 10 eingespeist. Sie steht somit für den Betrieb zumindest eines Traktionsmotors und optional weiterer Verbraucher aus dem Zwischenkreis zur Verfügung.

Alternativ oder zusätzlich kann nach dem Start der Kombination 1 a, 3a die von der elektrischen Maschine 3a erzeugte Energie über den zugeordneten Maschinen-Wechselrichter 23a in die Gleichspannungsverbindung 18 eingespeist werden und steht für den Start einer oder mehrerer anderer Kombinationen 1, 3 zur Verfügung.

Der Spannungswandler 26 ist außerdem über eine elektrische Leitung mit der Leitung 10 auf dem höheren elektrischen Potenzial des Zwischenkreises verbunden, und zwar über einen Widerstand 29 und eine Diode 30. Die Leitung 22 ist durch den Schalter 27 von dem Spannungswandler 26 trennbar. Über die Leitung 22 kann der Gleichspannungs-Zwischenkreis (insbesondere die Kapazität CD) vorgeladen werden, d.h. es kann eine entsprechende elektrische Spannung zwischen der Leitung 10 und der Leitung 8 erzeugt werden. Dadurch werden beim Zuschalten der Generatoren 3 durch Schließen der Schalter 14 sehr hohe elektrische Ströme vermieden.

An der in Fig. 1 dargestellten Anordnung sind zahlreiche Modifikationen möglich. Zum Beispiel kann eine andere Anzahl der Kombinationen 1, 3 vorhanden sein. Alternativ oder zusätzlich können mehrere Gleichspannungs-Zwischenkreise vorgesehen sein, aus denen jeweils zumindest ein Traktionsmotor mit elektrischer Energie versorgt wird. Wiederum alternativ oder zusätzlich können Modifikationen an den Einrichtungen zum Einspeisen von Energie aus dem Energiespeicher 19 in die Gleichspannungsverbindung 18 vorgenommen werden, zum Beispiel kann zumindest ein weiterer Spannungswandler parallel zu dem in Fig. E dargestellten Spannungswandler 26 geschaltet sein, so dass der Energiespeicher 19 wahlweise oder gleichzeitig über einen oder mehrere Spannungswandler elektrische Energie zur Verfügung stellen kann.

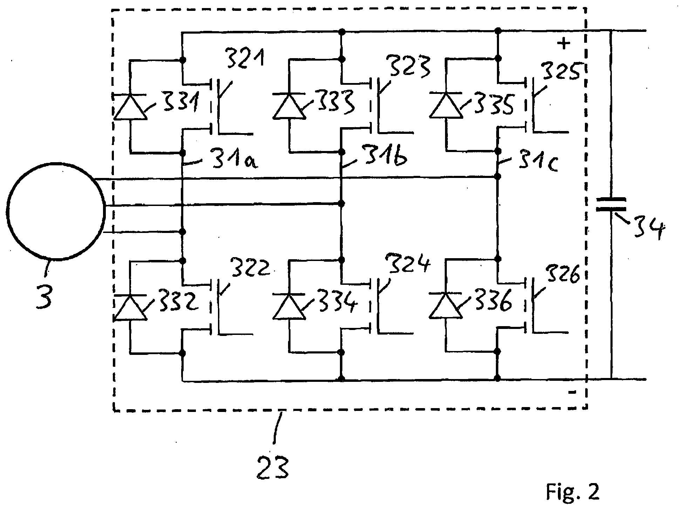

Fig. 2 zeigt ein Ausführungsbeispiel für einen Maschinen-Stromrichter bzw. Maschinen-Wechselrichter, der insbesondere jeder der in Fig. 1 dargestellten Maschinen-Wechselrichter 23 sein kann. Links in Fig. 2 ist die zugeordnete elektrische Maschine 3 dargestellt, wobei der optional vorhandene elektrische Schalter 24 aus Fig. 1 in Fig. 2 nicht dargestellt ist.

Die elektrische Maschine 3 ist über eine dreiphasige elektrische Leitung, die in Fig. 1 als Abzweigung der Leitung 4 dargestellt ist, mit der Wechselspannungsseite des Maschinen-Stromrichters 23 verbunden. Der Stromrichter 23 ist aus drei Halbbrücken 31 a, 31 b, 31 c aufgebaut, die jeweils durch eine Serienschaltung von zwei Parallelschaltungen jeweils eines steuerbaren elektronischen Schalters 321-326 und einer antiparallel dazu geschalteten Diode 331-336 gebildet ist. In jeder Halbbrücke 31 a, 31 b, 31 c befindet sich der Kontakt des Wechselspannungsanschlusses zwischen den in Reihe geschalteten Parallelschaltungen.

Die entgegengesetzten Enden der Halbbrücken 31 sind jeweils auf einen von zwei gemeinsamen Polen des Gleichspannungsanschlusses geführt, die in Fig. 2 mit einem Pluszeichen und einem Minuszeichen gekennzeichnet sind. Zwischen diese Pole bzw. unterschiedlichen elektrischen Potenziale ist eine Kapazität 34 geschaltet. Außerdem sind die beiden Pole des Gleichspannungsanschlusses mit einer Gleichspannungsverbindung verbunden, über die der Stromrichter 23 mit Gleichstrom versorgt werden kann und vorzugsweise auch andere Einrichtungen mit Gleichstrom versorgen kann, je nachdem in welchem Betriebszustand sich die elektrische Maschine befindet. Entsprechend dem Betriebszustand wird auch die Steuerung der elektronischen Ventile 321-326 (bei denen es sich vorzugsweise um IGBTs handelt) durchgeführt oder nicht durchgeführt. Insbesondere ist der Wechselrichter-Betrieb des Stromrichters 23 gesperrt (insbesondere sind dann die elektronischen Ventile alle ausgeschaltet), wenn die elektrische Maschine 3 nicht mit Wechselstrom von dem Stromrichter 23 zu versorgen ist. Wenn außerdem die elektrische Maschine in dem Betriebszustand ist, in dem sie den Stromrichter 23 mit Wechselstrom versorgt, um den von dem Stromrichter 23 gleichgerichteten Strom zumindest einer anderen Verbrennungsmotor-Maschinen-Kombination zuzuführen, wird der Wechselstrom aufgrund der Dioden 331-336 des Stromrichters 23 gleichgerichtet und es ergibt sich entsprechend der verketteten Wechselspannungen der drei Phasen ein Gleichstrom an der Gleichspannungsseite des Stromrichters 23, dessen Spannungsschwankungen durch die Kapazität 34 geglättet werden. In diesem Betriebszustand sind die elektrischen Potenziale an den jeweiligen Kontakten des Wechselspannungsanschlusses des Stromrichters 23 in jeder Periode des Wechselstroms zeitweise größer als die elektrischen Potenziale an dem Pluspol des Gleichspannungsanschlusses, sodass die Dioden 331, 333, 335 entsprechend elektrisch leitend werden. Umgekehrt wird das elektrische Potenzial an den Wechselspannungskontakten in jeder Periode zeitweise niedriger als das elektrische Potenzial am zweiten Pol des Gleichspannungsanschlusses, sodass die Dioden 332, 334, 336 zeitweise elektrisch leitend werden.

Im Folgenden werden bevorzugte Verfahrensweisen insbesondere am Beispiel der Anordnung gemäß Fig. 1 beschrieben. Dabei werden auch konkrete Beispiele für Betriebszustände (z.B. elektrische Spannungen) genannt, auf die die Verfahrensweisen jedoch nicht beschränkt sind. In der Praxis können diese elektrischen Spannungen und andere elektrische Größen variieren bzw. anders gewählt werden.

Dabei wird davon ausgegangen, dass auf der Gleichspannungsseite von jedem der Maschinen-Stromrichter 23 eine Kapazität zwischen die Pole des Gleichspannungsanschlusses geschaltet ist, wobei die Kapazitäten vorzugsweise gleich groß gewählt sind. Die in der Gleichspannungsverbindung der Maschinen-Stromrichter insgesamt vorhandene Kapazität ist daher mindestens so groß wie die Anzahl der angeschlossenen Maschinen-Stromrichter multipliziert mit der einzelnen Kapazität. Es kann daher erhebliche Energie in den Kapazitäten gespeichert werden und steht für die gegenseitige Versorgung der Maschinen-Stromrichter zur Verfügung. Außerdem wird die Glättung von Spannungsschwankungen in der Gleichspannungsverbindung verbessert. Vorzugsweise wird für den Start eines der Verbrennungsmotoren jedoch nicht nur Energie aus den Kapazitäten der Gleichspannungsverbindung bezogen, sondern während des Startvorgangs zusätzlich von zumindest einer der anderen Kombinationen Energie in die Gleichspannungsverbindung eingespeist.

Insbesondere kann das Spannungsniveau aufgrund der Einspeisung von elektrischer Energie von zumindest einer der elektrischen Maschinen der Kombinationen in der Gleichspannungsverbindung höher sein als wenn die-Gleichspannungsverbindung ausschließlich Energie aus dem Energiespeicher 19 des Fahrzeugs bezieht.

Z.B. beträgt nach Schließen des optionalen Schutzschalters 25 das Spannungsniveau am speicherseitigen Eingang des Spannungswandlers 26 ca. 110 V und erhöht der Spannungswandler diese Spannung an seinem Ausgang auf ein Spannungsniveau im Bereich von 750 V. Dieses erhöhte Spannungsniveau ist jedoch insbesondere niedriger als das spätere Spannungsniveau in der Gleichspannungsverbindung 18, das bei Einspeisung von Energie über einen oder mehrere der Maschinen-Stromrichter 23 erreichbar ist. Startvorgänge oder andere Versorgung der verschiedenen Kombinationen 1, 3 untereinander können daher auf höherem Spannungsniveau und somit schneller und bei höheren Energieströmen stattfinden als bei Versorgung ausschließlich aus dem Energiespeicher des Fahrzeugs. Insbesondere können die sämtlichen vorhandenen Kombinationen daher schneller und auch effektiver gestartet werden als bei Bezug von Startenergie ausschließlich aus dem Energiespeicher 19.

Soll z.B. beim Aufrüsten einer Lokomotive, z.B. einer Diesellokomotive, der erste Verbrennungsmotor (insbesondere Dieselmotor) gestartet werden, sind die elektrischen Schalter 14 geöffnet und sind daher die elektrischen Maschinen 3 noch vom Gleichspannungszwischenkreis 8, 10 elektrisch getrennt. Nun wird vorzugsweise zunächst der Schalter 27 geschlossen, um den Ausgang des Spannungswandlers 26 mit den Gleichspannungsanschlüssen der Maschinen-Stromrichter 23 und gleichzeitig mit dem Gleichspannungszwischenkreis 8, 10 zu verbinden. Wie bereits erwähnt, befindet sich in der elektrischen Leitung 22 die Sperrdiode 30, um bei Betrieb des Zwischenkreises nach dem Start der Verbrennungsmotoren vor zu hoher Spannung zu schützen.

Nun kann der zumindest eine Spannungswandler 26 eingeschaltet werden und nach Einschalten des optionalen Schutzschalters 25 lädt der Energiespeicher 19 bzw. der Spannungswandler 26 die Kapazitäten CD in den Zwischenkreis 8, 10 und die nicht in Fig. 1 dargestellten Kapazitäten an den Anschlüssen der Gleichspannungsverbindung 18 auf. Durch das Aufladen der Kapazität CD wird die Anordnung vor zu hohen Strömen geschützt, die ohne Vorladung der Kapazität nach dem Einschalten zumindest eines der Schalter 14 auftreten könnten. Insbesondere kann auch zum Aufladen der Kapazitäten die Gleichspannung am Ausgang des Spannungswandlers 26 zunächst noch niedrig sein und dann im Laufe der Zeit erhöht werden.

Insbesondere wenn die Spannung in dem Gleichspannungszwischenkreis 8, 10 eine bestimmte vorgegebene Spannung erreicht hat, wird der Startvorgang eines ersten Verbrennungsmotors begonnen. Hierzu wird der Schalter 25 in der elektrischen Leitung zwischen dem Maschinen-Stromrichter 23 der Kombination geschlossen und der Maschinen-Stromrichter 23 so gesteuert, dass an seiner Wechselspannungsseite eine Wechselspannung erzeugt wird und ein Wechselstrom zu der zugeordneten elektrischen Maschine 3 fließt. Vorher oder gleichzeitig kann die Steuerung des Verbrennungsmotors in einen startbereiten Zustand versetzt werden.

Vorzugsweise wird der Maschinen-Stromrichter 23 der zu startenden Kombination so gesteuert, dass der von ihm erzeugte Wechselstrom in der zugeordneten elektrischen Maschine 3 ein Drehfeld in der Drehrichtung erzeugt, in der der gekoppelte Betrieb des Verbrennungsmotors und der elektrischen Maschine stattfinden soll. Dabei wird die Frequenz dieses Wechselstroms vorzugsweise im Laufe der Zeit erhöht, um den Verbrennungsmotor zuerst aus dem Ruhezustand in Bewegung zu versetzen und dann zu beschleunigen. Vorzugsweise beim Erreichen oder Überschreiten einer vorgegebenen Mindestdrehzahl beginnt die Verbrennungsmotor-Steuereinheit automatisch mit der Kraftstoffzufuhr zu dem Verbrennungsmotor, sodass der Verbrennungsmotor selbst zur weiteren Beschleunigung beiträgt. Insbesondere beim Erreichen eines (weiteren, höheren) vorgegebenen Drehzahlwertes oder bei dessen Überschreiten wird der Motor-Wechselrichter 23 gesperrt, d.h. erzeugt nicht länger Wechselstrom. Hierzu werden die elektronischen Schalter dauerhaft ausgeschaltet.

Spätestens zu diesem Zeitpunkt kann der Schalter 27 wieder geöffnet werden, sodass keine weitere Energie aus dem Energiespeicher 19 bezogen wird. Gleichzeitig oder alternativ wird der Spannungswandler 26 abgeschaltet.

Der Startvorgang wird fortgesetzt, indem der Verbrennungsmotor selbständig seine Drehzahl weiter erhöht, insbesondere bis eine Leerlaufdrehzahl erreicht ist.

Der erste vorgegebene Drehzahlwert liegt z.B. bei 120 pro Minute, der zweite vorgegebene Drehzahlwert z.B. bei 400 pro Minute und die Leerlaufdrehzahl z.B. bei ungefähr 600 pro Minute.

Wenn der Verbrennungsmotor seine Drehzahl nach dem Sperren des zugeordneten Maschinen-Wechselrichters 23 weiter erhöht, steigt auch die durch die zugeordnete elektrische Maschine erzeugte Wechselspannung an. Wenn der Schalter 24 weiter geschlossen bleibt oder wieder geschlossen wird, steigt daher die elektrische Wechselspannung am Wechselspannungsanschluss des Maschinen-Stromrichters an und lässt die elektrischen Einwegventile (insbesondere die Dioden 331-336 in Fig. 2) zyklisch leitend werden, sodass der Maschinen-Stromrichter 23 an seiner Gleichspannungsseite einen Gleichstrom erzeugt. Die entsprechende elektrische Energie steht nun für das weitere Aufladen der Kapazitäten in der Gleichspannungsverbindung und insbesondere gleichzeitig oder später für den Start zumindest eines weiteren Verbrennungsmotors zur Verfügung. Durch Schließen des jeweiligen elektrischen Schalters 24 und Ansteuern des zugeordneten Maschinen-Stromrichters 23, insbesondere in der gleichen oder in einer ähnlichen Weise wie oben beschrieben, wird der Verbrennungsmotor der jeweiligen Kombination 1, 3 gestartet.

Die elektrischen Schalter 14 können entweder geschlossen werden, wenn alle Verbrennungsmotoren gestartet wurden oder wenn diejenigen Kombinationen gestartet wurden, die für den Betrieb vorgesehen sind. Dann beginnt die Einspeisung von elektrischer Energie von der jeweiligen elektrischen Maschine 3 über den geschlossenen Schalter 14 und den zugeordneten Gleichrichter 5 in den Gleichspannungszwischenkreis 8, 10. Alternativ kann zumindest einer der elektrischen Schalter 14 bereits früher geschlossen werden. Dies kann insbesondere dann geschehen, wenn die Kapazität CD in dem Gleichspannungszwischenkreis 8, 10 bereits vorgeladen wurde und z.B. bereits eine oder mehrere der Kombinationen 1, 3 gestartet wurden und elektrische Energie erzeugen. Dies kann aber alternativ auch zu einem früheren Zeitpunkt geschehen, wenn die von der elektrischen Maschine 3 einer gestarteten Kombination 1, 3 erzeugte elektrische Wechselspannung noch niedrig ist, d.h. die Drehzahl des Verbrennungsmotors 1 noch niedrig ist. Auch in diesem Fall werden zu hohe Ströme durch Aufladen der noch leeren Kapazität CD verhindert.

Varianten der oben beschriebenen Verfahrensweisen sind möglich. Z.B. kann es abhängig von dem jeweiligen Betriebszustand des Schienenfahrzeugs ausreichen, wenn nur eine der Kombinationen 1, 3 oder nur ein Teil der Kombinationen 1, 3 Energie in den Gleichspannungszwischenkreis 8, 10 einspeist. Dies ist z.B. der Fall, wenn lediglich wenig Energie für die Traktions-Motoren benötigt wird oder sogar nur andere elektrische Verbraucher mit Energie aus dem Gleichspannungszwischenkreis versorgt werden müssen, z.B. Verbraucher, die an eine Zugstromversorgung angeschlossen sind. Auch in diesem Fall kann der Schalter 14 der benötigten Kombination 1, 3 geschlossen sein. Insbesondere kann dann auch der Schalter 24 der Kombination geöffnet sein.

Insbesondere abhängig von dem Betriebszustand des Schienenfahrzeugs kann, wenn lediglich ein Teil der Kombinationen 1, 3 bereits gestartet ist, zumindest eine weitere Kombination 1, 3 wieder mit Energie aus dem Energiespeicher 19 gestartet werden und/oder zumindest eine noch nicht gestartete Kombination 1, 3 mit Energie aus einer bereits gestarteten Kombination gestartet werden. In dem zuletzt genannten Fall werden in Bezug auf das Ausführungsbeispiel von Fig. 1 sowohl der Schalter 24 der bereits gestarteten Kombination als auch der Schalter 24 der zu startenden Kombination geschlossen und wird der Maschinen-Stromrichter 23 der zu startenden Kombination mit Gleichstrom versorgt, der aus Wechselstrom erzeugt wurde, welcher von der elektrischen Maschine der bereits gestarteten Kombination erzeugt wurde. Wenn eine weitere Kombination mit Energie aus dem Energiespeicher des Fahrzeugs gestartet wird und wenn mindestens noch eine weitere, noch nicht gestartete Kombination vorhanden ist, wird diese zumindest eine noch weitere Kombination vorzugsweise mit Energie aus einer bereits gestarteten Kombination gestartet.

## Patentansprüche

1. Anordnung zum Versorgen von elektrischen Traktionsmotoren in einem Schienenfahrzeug mit elektrischer Energie, wobei die Anordnung aufweist:
- zumindest zwei Verbrennungsmotoren (1),
- für die zumindest zwei Verbrennungsmotoren (1) jeweils eine zugeordnete elektrische Maschine (3) zum Erzeugen der elektrischen Energie, wobei die elektrische Maschine (3) mechanisch mit dem Verbrennungsmotor (1) gekoppelt ist, sodass sie bei einem Generator-Betrieb der elektrischen Maschine (3) von dem Verbrennungsmotor (1) angetrieben wird, sodass zumindest eine erste und eine zweite Verbrennungsmotor-Maschinen-Kombination gebildet sind,
- zumindest einen elektrischen Traktions-Anschluss, über den ein elektrischer Traktionsmotor des Schienenfahrzeugs elektrisch mit zumindest einer ersten der elektrischen Maschinen (3) verbindbar ist, wobei der Traktionsmotor über einen Gleichspannungs-Zwischenkreis (8, 10) der Anordnung mit elektrischer Energie von der ersten elektrischen Maschine (3) versorgbar ist,
- für die elektrischen Maschinen (3) jeweils einen zugeordneten Maschinen-Stromrichter (23) zum Versorgen der elektrischen Maschine (3) mit elektrischer Energie während eines Motor-Betriebes der elektrischen Maschine (3), wobei ein Wechselspannungsanschluss des Maschinen-Stromrichters (23) mit der elektrischen Maschine (3) verbunden ist, und
- eine Steuerungsanordnung zum Steuern zumindest des Betriebes der Maschinen-Stromrichter,
wobei die erste elektrische Maschine (3a) elektrisch mit einem Wechselspannungsanschluss eines Gleichrichters (23a) verbunden ist,
wobei die Anordnung zusätzlich zu den Maschinen-Stromrichtern (23) einen Generator-Gleichrichter (5a) aufweist zum Gleichrichten von Wechselströmen, die von der ersten elektrischen Maschine (3a) während eines Generator-Betriebes der ersten elektrischen Maschine (3a) erzeugt werden, wobei der Generator-Gleichrichter (5a) auf seiner Wechselspannungsseite mit der ersten elektrischen Maschine (3a) verbunden ist und auf seiner Gleichspannungsseite mit dem Gleichspannungs-Zwischenkreis (8, 10) verbunden ist,
der Gleichrichter (23a) der der ersten elektrischen Maschine zugeordnete, erste Maschinen-Stromrichter ist und steuerbare elektronische Schalter aufweist, wobei antiparallel zu den steuerbaren elektronischen Schaltern des ersten Maschinen-Stromrichters (23a), die die Wechselrichterfunktion ermöglichen, jeweils zumindest ein elektrisches Einwegventil angeordnet ist, sodass die elektrischen Einwegventile den von der ersten elektrischen Maschine (3a) erzeugten Wechselstrom gleichrichten,
wobei ein Gleichspannungsanschluss des Gleichrichters (23a) über eine elektrische Gleichspannungsleitung (18) elektrisch mit einer Gleichspannungsseite eines zweiten (23b) der Maschinen-Stromrichter, der einer zweiten (3b) der elektrischen Maschinen zugeordnet ist, verbunden ist,
wobei der Gleichrichter (23a) den von der ersten elektrischen Maschine (3a) erzeugten elektrischen Wechselstrom gleichrichtet und über die Gleichspannungsleitung (18) dem zweiten Maschinen-Stromrichter (23b) zuführt, und die Steuerungsanordnung derart ausgestaltet ist, dass sie den zweiten Maschinen-Stromrichter (23b) als Wechselrichter betreibt, um die zweite elektrische Maschine (3b) mit Wechselstrom zu versorgen, während der zweite Maschinen-Stromrichter (23b) mit Gleichstrom von dem Gleichrichter (23a) versorgt wird,
und dass die erste elektrische Maschine (3a) mittels eines elektrischen Schalters (14a) elektrisch von dem Gleichspannungs-Zwischenkreis (8, 10) getrennt ist, während sie die zweite elektrische Maschine (3b) über die Gleichspannungsleitung (18) mit elektrischer Energie versorgt.

2. Anordnung nach Anspruch 1, wobei zwischen die verschiedenen elektrischen Potenziale der Gleichspannungsleitung (18) und/oder zwischen die verschiedenen elektrischen Potenziale eines Gleichspannungsanschlusses des Gleichrichters (23a) und/oder eines Gleichspannungsanschlusses zumindest eines der Maschinen-Stromrichter (23) zumindest eine elektrische Kapazität geschaltet ist.

3. Verfahren zum Versorgen von elektrischen Traktionsmotoren in einem Schienenfahrzeug mit elektrischer Energie, wobei:
- zumindest zwei Verbrennungsmotoren (1) jeweils in Kombination mit einer zugeordneten elektrischen Maschine (3) betrieben werden, sodass zumindest eine erste und eine zweite Verbrennungsmotor-Maschinen-Kombination betrieben werden,
- zumindest eine erste (3a) der elektrischen Maschinen (3) in einem ersten Betriebszustand der Maschine während eines Generator-Betriebes der jeweiligen elektrischen Maschine (3) angetrieben durch den Verbrennungsmotor Wechselstrom erzeugt, der von einem Generator-Gleichrichter (5a) gleichgerichtet wird und über einen GleichspannungsZwischenkreis (8, 10) für einen Betrieb zumindest eines elektrischen Traktionsmotors genutzt wird,
zumindest eine zweite (3b) der elektrischen Maschinen (3) in einem zweiten Betriebszustand der Maschine mit Wechselstrom von einem ihr zugeordneten Maschinen-Stromrichter (23b) versorgt wird und den ihr zugeordneten Verbrennungsmotor (1) antreibt,
zumindest der der zweiten elektrischen Maschine (3b) zugeordnete Maschinen-Stromrichter (23b), während sich die zugeordnete elektrische Maschine in dem zweiten Betriebszustand befindet, über eine elektrische Gleichspannungsleitung (18) mit Gleichstrom von einem der ersten elektrischen Maschine (3a) zugeordneten Gleichrichter (23a) versorgt wird,
wobei der Gleichrichter (23a) ein der ersten elektrischen Maschine zugeordneter, erster Maschinen-Stromrichter ist, steuerbare elektronische Schalter aufweist, wobei antiparallel zu den steuerbaren elektronischen Schaltern des ersten Maschinen-Stromrichters (23a), die die Wechselrichterfunktion ermöglichen, jeweils zumindest ein elektrisches Einwegventil angeordnet ist, sodass die elektrischen Einwegventile den von der ersten elektrischen Maschine (3a) erzeugten Wechselstrom gleichrichten, und den Gleichstrom aus Wechselstrom erzeugt, der von der ersten elektrischen Maschine (3a) erzeugt wird, und
wobei die erste elektrische Maschine (3a) elektrisch von dem GleichspannungsZwischenkreis (8, 10) getrennt ist, während sie die zweite elektrische Maschine (3b) über die Gleichspannungsleitung (18) mit elektrischer Energie versorgt.

4. Verfahren nach Anspruch 3, wobei zunächst zumindest eine elektrische Kapazität, die zwischen die elektrischen Potenziale der Gleichspannungsleitung (18) geschaltet ist, mit elektrischer Energie aufgeladen wird, und erst danach eine elektrische Maschine (3) mit umgerichtetem Gleichstrom aus der Gleichspannungsleitung (18) und/oder aus der zumindest einen Kapazität versorgt wird.

## Claims

1. An arrangement for supplying electric traction motors in a rail vehicle with electrical energy, wherein the arrangement comprises:
- at least two internal combustion engines (1),
- for the at least two internal combustion engines (1) each an associated electrical machine (3) for generating the electrical energy, in which the electrical machine (3) is coupled mechanically to the internal combustion engine (1) so that it is driven by the internal combustion engine (1) when the electrical machine (3) is operating in generator mode, so that at least a first and a second internal combustion engine combination are formed,
- at least one electrical traction connection by which an electrical traction motor of the rail vehicle is connectible electrically to a first of the electrical machines (3), wherein the traction motor can be supplied with electrical energy from the first electrical machine (3) via an intermediate direct voltage link of the arrangement,
- for the electrical machines (3) each an associated machine power converter (23) for supplying the electrical machine (3) with electrical energy during motor operation of the electrical machine (3), wherein an alternating voltage connection of the machine power converter (23) is connected with the electrical machine (3), and
- a control arrangement for controlling at least the operation of the machine power converter,
wherein the first of the electrical machines (3a) is connected electrically with an alternating voltage connection of a rectifier (23a),
wherein the arrangement comprises, in addition to the machine power converters (23), a generator rectifier (5) for rectifying alternating currents generated by the first electrical machine (3a) during generator mode of the first electrical machine (3a), wherein the at least one generator rectifier (5) is connected, on its alternating voltage side, with the first electrical machines (3a) and, on its direct voltage side, with the intermediate direct voltage link (8, 10),
the rectifier (23a), which is the first machine power converter that is assigned to the first electrical machine and which comprises controllable electronic switches, wherein an electrical one-way valve is arranged in each case anti-parallel to the controllable electronic switches of the first machine power converter (23a) that enable the inverter function, so that the electrical one-way valves rectify the alternating current generated by the first electrical machine (3a),
wherein a direct voltage connection of the rectifier (23a) is connected electrically, via an electrical direct voltage line (18), with a direct voltage side of a second (23b) of the machine power converters associated with a second (3b) of the electrical machines, wherein the rectifier (23a) rectifies the electrical alternating current generated by the first electrical machine (3a) and feeds it, via the direct voltage line (18), to the second machine power converter (23b), and the control arrangement is designed so that it operates the second machine power converter (23b) as inverter in order to supply the second electrical machine (3b) with alternating current, while the second machine power converter (23b) is supplied with direct current from the rectifier (23a),
and that the first electrical machine (3a) is separated electrically from the intermediate direct voltage link (8, 10) by means of an electrical switch (14a).

2. The arrangement according to claim 1, wherein at least one electrical capacitance is connected between the different electrical potentials of the direct voltage line (18) and/or between the different electrical potentials of a direct voltage connection of the rectifier (23a) and/or of a direct voltage connection of at least one of the machine power converters (23).

3. A method for supplying electric traction motors in a rail vehicle with electrical energy, wherein:
- at least two internal combustion engines (1) are operated each in combination with an associated electrical machine (3) so that at least a first and a second internal combustion engine/machine combination are operated,
- at least a first (3a) of the electrical machines (3), in a first operating state of the machine during generator mode of the respective electrical machine (3) driven by the internal combustion engine, generates alternating current that is rectified by a generator rectifier (5a) and is used for operating at least one electrical traction motor via an intermediate direct voltage link (8, 10),
at least a second (3b) of the electrical machines (3), in a second operating state of the machine, is supplied with alternating current from a machine power converter (23) associated with it and drives the internal combustion engine (1) associated with it,
wherein at least the machine power converter (23b) associated with the second electrical machine (3b), while the associated electrical machine is in the second operating state, is supplied with direct current, via an electrical direct voltage line (18), by a rectifier (23a) associated with the first electrical machine (3a),
wherein the rectifier (23a) is a first machine power converter assigned to the first electrical machine, comprises controllable electronic switches, wherein anti-parallel wise to the controllable electronic switches of the first machine power converter (23a), that in able the inverter function, there is arranged in each case and electrical one-way valve, so that the electrical one-way valves rectify the alternating current generated by the first electrical machine (3a) and the rectifier (23a) generates the direct current from alternating current generated by the first electrical machine (3a) and
wherein the first electrical machine (3a) is separated electrically from the intermediate direct voltage link (8, 10), while it supplies the second electrical machine (3b) with electrical energy via the direct voltage line (18).

4. The method according to claim 3, wherein at least one electrical capacitance connected between the electrical potentials of the direct voltage line (18) is charged at first with electrical energy and only after that an electrical machine (3) is supplied with inverted direct current from the direct voltage line (18) and/or from the at least one capacitance.

## Revendications

1. Ensemble servant à alimenter en énergie électrique des moteurs de traction électriques dans un véhicule sur rails, dans lequel l'ensemble présente :
- au moins deux moteurs à combustion interne (1),
- pour les au moins deux moteurs à combustion interne (1), respectivement une machine électrique (3) associée servant à produire de l'énergie électrique, dans lequel la machine électrique (3) est couplée de manière mécanique au moteur à combustion interne (1) de sorte qu'elle soit entraînée par le moteur à combustion interne (1) lors d'un mode de fonctionnement en générateur de la machine électrique (3) de sorte qu'au moins une première et une deuxième combinaison de machines de moteur à combustion interne soient formées,
- au moins un raccordement de traction électrique, par l'intermédiaire duquel un moteur de traction du véhicule sur rails peut être relié de manière électrique à au moins une première des machines électriques (3), dans lequel le moteur de traction peut être alimenté en énergie électrique par la première machine électrique (3) par l'intermédiaire d'un circuit intermédiaire de tension continue (8, 10) de l'ensemble,
- pour les machines électriques (3), respectivement un convertisseur de puissance de machine (23) associé servant à alimenter en énergie électrique la machine électrique (3) au cours d'un mode de fonctionnement en moteur de la machine électrique (3), dans lequel un raccordement de tension alternative du convertisseur de puissance de machine (23) est relié à la machine électrique (3), et
- un ensemble de commande servant à commander au moins le fonctionnement des convertisseurs de puissance de machine, dans lequel la première machine électrique (3a) est reliée de manière électrique à un raccordement de tension alternative d'un redresseur (23a),
dans lequel l'ensemble présente en plus des convertisseurs de puissance de machines (23) un redresseur de générateur (5a) destiné à redresser des courants alternatifs, qui sont produits par la première machine électrique (3a) au cours d'un mode de fonctionnement en générateur de la première machine électrique (3a), dans lequel le redresseur de générateur (5a) est relié, sur son côté de tension alternative, à la première machine électrique (3a) et est relié, sur son côté de tension continue, au circuit intermédiaire de tension continu (8, 10),
le redresseur (23a) est le premier convertisseur de puissance de machine associé à la première machine électrique et présente des commutateurs électroniques pouvant être commandés, dans lequel respectivement au moins une soupape unidirectionnelle électrique est disposée de manière antiparallèle par rapport aux commutateurs électroniques pouvant être commandés du premier convertisseur de puissance de machine (23a), qui permettent la fonction d'onduleur de sorte que les soupapes unidirectionnelles électriques redressent le courant alternatif produit par la première machine électrique (3a),
dans lequel un raccordement de tension continue du redresseur (23a) est relié de manière électrique, par l'intermédiaire d'une ligne de tension continue électrique (18), à un côté de tension continue d'un deuxième (23b) des convertisseurs de puissance de machine, qui est associé à une deuxième (3b) des machines électriques,
dans lequel le redresseur (23a) redresse le courant alternatif électrique produit par la première machine électrique (3a) et l'amène, par l'intermédiaire de la ligne de tension continue (18), au deuxième convertisseur de puissance de machine (23b), et l'ensemble de commande est configuré de telle manière qu'il fait fonctionner le deuxième convertisseur de puissance de machine (23b) en tant qu'onduleur afin d'alimenter en courant alternatif la deuxième machine électrique (3b), tandis que le deuxième convertisseur de puissance de machine (23b) est alimenté en courant continu par le redresseur (23a),
et la première machine électrique (3a) est séparée de manière électrique du circuit intermédiaire de tension continue (8, 10) au moyen d'un commutateur électrique (14a), tandis qu'elle alimente en énergie électrique la deuxième machine électrique (3b) par l'intermédiaire de la ligne de tension continue (18).

2. Ensemble selon la revendication 1, dans lequel au moins une capacité électrique est branchée entre les différents potentiels électriques de la ligne de tension continue (18) et/ou entre les différents potentiels électriques d'un raccordement de tension continue du redresseur (23a) et/ou d'un raccordement de tension continue au moins d'un des convertisseurs de puissance de machine (23).

3. Procédé servant à alimenter en énergie électrique des moteurs de traction électriques dans un véhicule sur rails, dans lequel :
- au moins deux moteurs à combustion interne (1) fonctionnent respectivement en combinaison avec une machine électrique (3) associée de sorte qu'au moins une première et une deuxième combinaison de machines de moteur à combustion interne fonctionnent,
- au moins une première (3a) des machines électriques (3) produit, entraînée par le moteur à combustion interne, un courant alternatif dans un premier état de fonctionnement de la machine au cours d'un mode de générateur de la machine électrique (3) respective, lequel courant alternatif est redressé par un redresseur de générateur (5a) et est utilisé pour un mode de fonctionnement au moins d'un moteur de traction électrique par l'intermédiaire d'un circuit intermédiaire de tension continue (8, 10),
au moins une deuxième (3b) des machines électriques (3) est alimentée en courant alternatif par un convertisseur de puissance de machine (23b) qui lui est associé dans un deuxième état de fonctionnement de la machine et entraîne le moteur à combustion interne (1) qui lui est associé, au moins le convertisseur de puissance de machine (23b) associé à la deuxième machine électrique (3b) est alimenté, par l'intermédiaire d'une ligne de tension continue (18) électrique en courant continu par un redresseur (23a) associé à la première machine électrique (3a) alors que la machine électrique associée se trouve dans le deuxième état de fonctionnement,
dans lequel le redresseur (23a) est un premier convertisseur de puissance de machine associé à la première machine électrique, présente des commutateurs électroniques pouvant être commandés, dans lequel respectivement au moins une soupape unidirectionnelle électrique est disposée de manière antiparallèle par rapport aux commutateurs électroniques pouvant être commandés du premier convertisseur de puissance de machine (23a), qui permettent la fonction d'onduleur de sorte que les soupapes unidirectionnelles redressent le courant alternatif produit par la première machine électrique (3a), et produit à partir du courant alternatif le courant continu, qui est produit par la première machine électrique (3a), et
dans lequel la première machine électrique (3a) est séparée de manière électrique du circuit intermédiaire de tension continue (8, 10), tandis qu'elle alimente en énergie électrique la deuxième machine électrique (3b) par l'intermédiaire de la ligne de tension continue (18).

4. Procédé selon la revendication 3, dans lequel dans un premier temps au moins une capacité électrique, qui est branchée entre les potentiels électriques de la ligne de tension continue (18), est chargée en énergie électrique, et seulement après une machine électrique (3) est alimentée en un courant continu inversé provenant de la ligne de tension continue (18) et/ou provenant de l'au moins une capacité.
